# EUROPEAN PATENT APPLICATION

(11) **EP 4 447 249 A1**
(43) Date of publication of application: **16.10.2024**
(21) Application number: 23167361.7
(22) Date of filing: 11.04.2023
(51) Int. Cl.: H02J 3/14

(54) **GRID BALANCING METHOD**

(71) Applicant: Wandafitz & Friends UG (haftungsbeschränkt), 78078 Niedereschach (DE)
(72) Inventor: Kempa, Mark, 78048 Villingen-Schwenningen (DE); Kempa, Tim, 78048 Villingen-Schwenningen (DE); Stegmann, Dominik, 78048 Villingen-Schwenningen (DE)
(74) Representative: Meyer zu Bexten, Elmar

(57) **Abstract**

Electrical power grid balancing procedure, wherein electric power is produced by a renewable energy source, said electric power is used for operating electrical equipment, whereby heat is produced.

## Description

This invention relates to the field of grid balancing of electricity supply, especially the field of grid balancing of electricity supply from renewable sources of electricity in combination with cooling of electronic components in an economic and environmentally friendly manner.

In a co-pending second patent application of the applicants called "Two phase immersion cooling of electronic components", systems and procedures for cooling electronic components are described that might be applicable in connection with the embodiments described herein. The content of this co-pending second patent application therefore is incorporated herein by reference.

The generation of power from renewable sources, like electricity from solar panels or wind plants, tends to vary strongly depending on the hour of the day and/or weather conditions.

In times of strong sunshine a solar plant might produce much more energy than could readily be consumed locally. The same is true for wind plants in times of strong wind.

In such cases, the power distribution network or grid might be overloaded.

In applying feed-in management, network or grid operators in such situations usually turn down some plants in a controlled manner.

Another factor is the price of electricity.

As an example: if some Sunday afternoon the sun is shining and wind is blowing, a lot of electric current is produced. If at that time no industrial customer is able to consume this current, electricity prices may even become negative.

At present, the mainly known possibilities to solve this dilemma are either
1. to store the surplus energy produced in storage power stations or simply in accumulators like for example the so called swarm battery ("Schwarmbatterie", Lichtblick SE) or XXL batteries
2. "Power to Gas" procedures like hydrogen, ammonia or methane technologies

Neither of these two possibilities is really satisfying in practice.

The amount of energy to be stored in batteries is generally limited.

Producing gas from electricity is generally technologically involved, and if applied as a storage means, it is an overall lossy procedure, since when the produced gas will be retransferred into electricity, considerable heat losses are involved, as known in the art.

In order to solve these drawbacks of present technology, this invention applies so called "bitcoin mining" in order to consume electric current generated by regenerative energies in a flexible manner. Further, the surplus heat can be used in heating processes or cooling processes.

Although already consuming electric current generated by regenerative energies in a flexible manner in itself may help to balance the power generation grid, it is of course advisable, to give the generated heat some useful application, if possible.

Therefore, the present invention proposes an electrical power grid balancing procedure, wherein electric power is produced by a renewable energy source, and said electric power is used for operating electrical equipment, whereby heat may be produced. It should be pointed out, that usually more electric power is produced than necessary in order to assure a stable frequency.

The renewable energy source might be solar energy or wind energy.
The amount of power produced may therefore vary in time.

Further, the additionally produced heat may be used in any kind of appropriate heat consuming process.

The amount of power consumed by the electrical equipment may be controlled.
It may for example be regulated in a continuous manner for each consumer individually.

Or the amount of power consumed by the electrical equipment may be controlled by turning part or all of the electrical equipment on, when additional power consumption is desired, or turning part or all of the electrical equipment off, when the power consumption shall be reduced. This decentralized or distributed power management is done via an intelligent software centrally controlled over internet.

The heat consuming process might comprise using a heating system, for example a house heating system or an industrial heating system.

The heat consuming process might comprise using a cooling or air conditioning system, for example a house cooling or air conditioning system or an industrial cooling or air conditioning system.

The electrical equipment may be part, such as a motherboard or power unit, of a computer, preferably a computer server, for example, being used for banking applications or bitcoin mining. The electrical equipment, or part of it, may further be cooled via immersion, air or water cooling if appropriate.

Further, since these computers are located at a variety of decentralized locations, in remotely controlling and managing the computational load of these servers individually, the amount of consumed electrical energy as well as the amount of heat produced may be managed and controlled in this variety of decentralized locations at the same time as well.

Thereby, the amount of consumed electrical energy may be balanced in the electrical energy distribution grid. Based on data provided by electric energy providers, an intelligent software will decide within seconds, at which locations an increase in consumed electric energy is appropriate or at which locations it is to be reduced and control the computational workload of the servers accordingly to fulfill these needs.

The present invention has the following advantages:
Our concept combines the mining technology with regenerative energy sources and heating processes or cooling processes.

Instead of feeding surplus electric current into the public network or grid, it is self-consumed in a flexible manner.

The grid balancing via flexibe management of bitcoin servers, as described herein, will serve various customer groups. And it will serve them in complementing ways.

Banks will profit from having their servers, especially bitcoin-servers be run effectively and on low costs of consumed electricity.

Electricity grid providers will profit from balancing out production and consumption of electrical energy, which both otherwise vary considerably throughout the day/week/month.

Electrical power plants will profit from being able to sell their produced electricity consistently and being less affected by time-related variations of energy consumption and prices as would otherwise be the case.

Public facilities like schools, swimming pools, district heating facilities etc. will profit especially from the decentralized heat generation involved.

These parties (and others not mentioned here) will definitively profit from this invention.

It is interesting to note though, that they will probably profit at varying locations, at different points in time and subject to individually varying optimization strategies.

Therefore, it is of utmost importance, that an intelligent software system manages the decentralized energy producers, energy consumers and individual cost structures and prices in a highly sophisticated manner.

As a proof of concept, a prototype is presently planed as follows:
An existing solar plant situated at an industrial enterprise will be used and will be supplemented by a mining equipment.

The equipment will be encased. Surplus electric current that cannot be readily fed into the energy network or grid of the enterprise, is used to operate the miner(s).

The miners are manipulated in such a manner that they are combined with heat recovery systems and/or heat exchangers. The heat is used for the heating installation or warm water production.

The advantages obtained by this invention are:
- The power grid or power supply network is relieved during current peaks
- Surplus current is monetized in a flexible manner at any location
- The payback period of investments into renewable energy sources is reduced
- Reduced costs for heating and cooling

In the following, the invention is described in detail with reference to the figures.

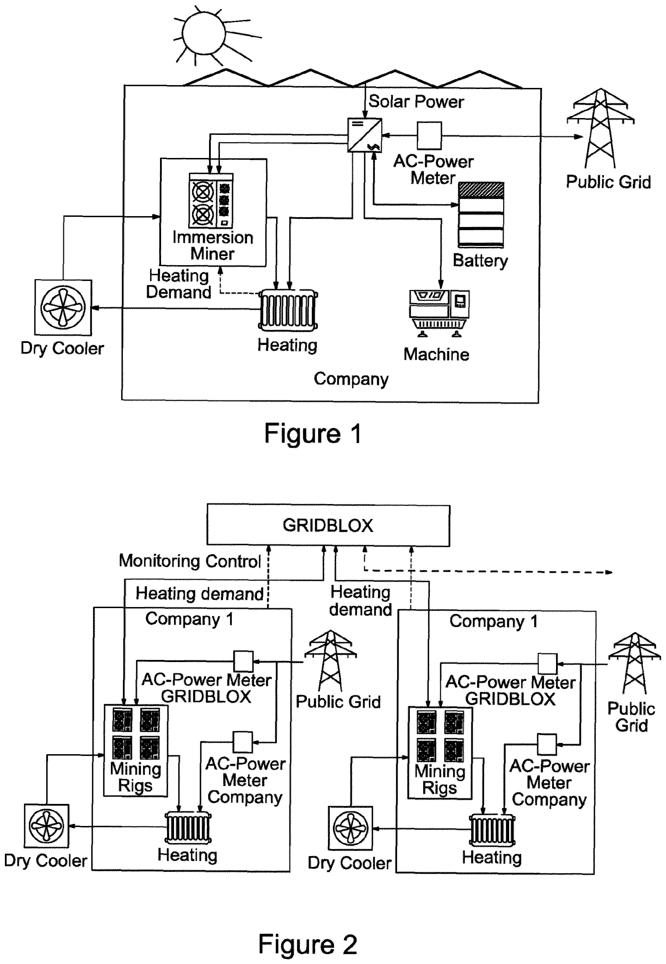

As shown in figure 1, a collection of solar panels create solar power when illuminated by the sun. As indicated in the figure, the solar panels may be situated on the roof of a building. They could of course be placed at any other location as well.

The solar power is then guided downwards to a switch system. As indicated in the figure by a section showing two parallel lines as well as a section showing a wave line, this switch system is adapted to transform DC current into AC current, and also to transform AC current into DC current. Via an AC power meter, there is also a bidirectional connection between the switch system and the public grid.

Therefore,the switch system is adapted to draw current from the solar panels and/or the public grid, and the switch system is also adapted to source current to the public grid if needed.

Further, the switch system is connected to at least one battery, to at least one machine, to at least one heating system and to at least one immersion or water cooled miner, all of which are shown to be situated within the building. Therefore, any heat produced by them will primarily stay within the building at first.
In this embodiment of the invention, it is intended to use the surplus heat produced by electric components for heating purposes. Therefore, it is intentional that all these components are shown to be situated within the building itself.

This is not to be seen as limiting of course: either of these components might also be placed outside the building. They may or may not be in heat contact to the building, as chosen to be appropriate in the specific situation.

In addition, a dry cooler is shown outside the building, and connected to heating and immersion miner.

Overall, this embodiment of the invention allows for flexible use of solar energy at any time.

If the sun is shining strongly, the solar panels will produce more solar power than needed by machines and heating system. This surplus energy might at first be stored internally in the battery to keep it loaded.

Further, surplus electric energy can be guided to the immersion miner to be consumed.

In consuming electrical energy, the immersion miner also produces heat, which can be guided to the heating system, such that it can be used and is not lost.

In addition, with flexibel energy price contracts of the electrical power supplier that represent the current market price for electrical energy prices, it can be economically useful to start mining when market prices fall.

In case of need, the dry cooler might be operated as well.

If appropriate, there is also the possibility to push surplus solar energy into the public grid.

On the other hand, at times of low sunshine, electric energy can still be drawn or pulled from the public net.

Therefore, the whole system is adapted to use the solar energy in a completely flexible manner.

The produced solar energy can either be consumed or stored or guided to the public grid, which usually will be decided on depending on present energy demands as well as the price of energy.

At times of high surplus solar energy production, the price for electricity pushed into the public net or grid will either be very low or even turn negative, i.e. the producer would have to pay to be able to supply it's surplus solar energy to the public.

This can be avoided, as shown in this embodiment, in that the immersion miner(s) is/are used to consume this surplus energy. They also do this in a flexible manner: the immersion miner(s) can be switched on or off as needed. If appropriate, their energy consumption can even be controlled or regulated in a smooth way, if switching on or off would not be considered to be appropriate.

At the same time, any heat produced by the immersion miner(s) can be used internally and therefore is usually not lost. The dry cooler will usually only be operated if additionally needed, for example in very warm weather.

Although solar energy is used in this embodiment, it should be clear that any kind of renewable energy could be used in the same manner, as for example wind energy.

When using wind energy, there might also be times of strong wind leading to high wind energy production, and times of low or missing wind, when much less or no wind energy is produced. The shown system of interconnected components can then be used accordingly to balance out energy production, energy consumption and optimize cost and/or revenue per amount of electricity produced or consumed.

The same applies to any other kind of renewable energy.
It even applies to methane emitting locations as landfills or thawing permafrost.

Therefore, in figure 2, is shown the interconnection of two or more companies each having a system according to the embodiment described above.

In figure 2, there are no solar panels shown at the individual companies sites.

These may or may not be implicitly present, as appropriate. In the same manner, a wind energy system and/or any other kind or renewable energy source may or may not be implicitly present as well, as appropriate.

The companies are connected to a GRIDBLOX system for monitoring control of the miners or mining rigs within the individual companies.

Further, in each company, there are two AC power meters in use: one to measure the power consumed by the companies machinery, and one to measure the power consumed by the miners or mining rigs within said company.

The company may then adjust the amount of energy consumed by it's machinery and/or the miners or mining rigs in a completely flexible manner according to it's own energy demands, according to the price per amount of energy produced and according to the price per amount of energy consumed.

All miners or mining rigs are further connected to the GRIDBLOX system for monitoring control of the miners or mining rigs within the individual companies. Therefore, the data and operating parameters needed for the miners or mining rigs can be delivered and/or exchanged via the GRIDBLOX system independent of the site of the respective miner or mining rig.

## Claims

1. Electrical power grid balancing procedure, wherein
electric power is produced by a renewable energy source,
said electric power is used for operating electrical equipment, whereby heat is produced.

2. Electrical power grid balancing procedure according to claim 1,
wherein the renewable energy source is solar energy.

3. Electrical power grid balancing procedure according to claim 1 or 2,
wherein the renewable energy source is wind energy.

4. Electrical power grid balancing procedure according to any of the preceding claims, wherein said heat is used in a heat consuming process.

5. Electrical power grid balancing procedure according to any of the preceding claims, wherein the amount of power consumed by the electrical equipment is controlled.

6. Electrical power grid balancing procedure according to claim 5, wherein the amount of power consumed by the electrical equipment is controlled by turning part or all of the electrical equipment on, when additional power consumption is desired, or turning part or all of the electrical equipment off, when the power consumption shall be reduced.

7. Electrical power grid balancing procedure according to claim 5 or 6,
wherein the amount of power consumed by the electrical equipment is controlled by turning part or all of the electrical equipment on, when additional heat is desired, or turning part or all of the electrical equipment off, when the heat consumption shall be reduced.

8. Electrical power grid balancing procedure according to any of the preceding claims, wherein the heat consuming process comprises using a heating system, for example a house heating system or an industrial heating system.

9. Electrical power grid balancing procedure according to any of the preceding claims, wherein the heat consuming process comprises using a cooling or air conditioning system, for example a house cooling or air conditioning system or an industrial cooling or air conditioning system.

10. Electrical power grid balancing procedure according to any of the preceding claims, wherein the amount of power produced may vary in time.

11. Electrical power grid balancing procedure according to any of the preceding claims, wherein the electrical equipment is part, such as a motherboard or power unit, of a computer, preferably a computer server, for example, being used for banking applications or bitcoin mining.

12. Electrical power grid balancing procedure according to any of the preceding claims, wherein the electrical equipment is cooled via immersion cooling.

13. Electrical power grid balancing procedure according to any of the preceding claims, wherein the electrical equipment is cooled via water cooling.
